Europäisches Patentamt

European Patent Office

Office européen des brevets

(19)

(11) Numéro de publication: **0 271 473 B1**

(12) **FASCICULE DE BREVET EUROPEEN**

(45) Date de publication de fascicule du brevet:
28.08.91

(51) Int. Cl.⁵: **C04B 41/71**

(21) Numéro de dépôt: 87870175.4

(22) Date de dépôt: **10.12.87**

(54) **Procédé pour appliquer un revêtement de parachèvement sur une face de parement d'un support poreux, en particulier une façade de béton cellulaire.**

(30) Priorité: **10.12.86 BE 217505**

(43) Date de publication de la demande:
**15.06.88 Bulletin 88/24**

(45) Mention de la délivrance du brevet:
**28.08.91 Bulletin 91/35**

(84) Etats contractants désignés:
**BE DE FR**

(56) Documents cités:
**DE-A- 3 109 257**
**FR-A- 2 334 795**

**CHEMICAL ABSTRACTS, vol. 93, no. 4, 4 juillet 1980, page 272, résumé no. 30890c, Columbus, Ohio, US; & JP-A-80 07 558 (MATSUSHITA ELECTRIC WORKS, LTD) 19-01-1980**

**FARBE + LACK, vol. 84, no. 11, novembre 1978, page 874; "Gefälltes Silicagel als Extender in Latexfarben"**

(73) Titulaire: **Vercauteren, Boudewijn**
**Maretak 612**
**B-9170 Waasmunster(BE)**

(72) Inventeur: **Vercauteren, Boudewijn**
**Maretak 612**
**B-9170 Waasmunster(BE)**

(74) Mandataire: **Gaspar, Florent et al**
**Bureau Vander Haeghen S.A. Rue Colonel Bourg 108 A**
**B-1040 Bruxelles(BE)**

## Description

La présente invention a pour objet un procédé pour appliquer un revêtement de parachèvement sur une face de parement d'un support poreux, en particulier une façade formée de panneaux de béton cellulaire, selon lequel après nettoyage préalable et la préparation du support, on applique sur celui-ci à raison de moins de 250 g/m², une couche d'imprégnation primaire d'étanchéité à l'eau constituée d'une composition contenant des composés siliconés et une résine synthétique; puis on applique par pulvérisation au pistolet, une couche de peinture murale de remplissage constituée d'une composition contenant des copolymères acryliques dans laquelle on incorpore des agents de pontage constitués d'éléments minéraux de grande dureté, aptes à former des liens qui renforcent l'accrochage de la couche de peinture murale de remplissage au support;

- éventuellement on projette sur la peinture murale de fond fraîchement appliquée, une multitude de grains minéraux décoratifs.

Elle est destinée à améliorer la longévité d'un revêtement décoratif et protecteur sur le gros-oeuvre non-protégé d'une façade formée de panneaux de béton cellulaire. Ce revêtement est constitué de plusieurs couches de divers produits de recouvrement muraux, en particulier d'une peinture murale garnie de fragments minéraux. Elle a pour but d'augmenter la résistance du revêtement aux intempéries et d'améliorer leur uniformité, y compris l'homogénéité des couleurs.

Elle trouve sa principale application dans le parachèvement extérieur d'un bâtiment industriel réalisé à partir de panneaux composites de béton cellulaire, de briques poreuses silico-calcaireuses ou d'autres matériaux poreux analogues.

En règle générale, le gros-oeuvre extérieur non-protégé en béton cellulaire peut être considéré comme résistant aux intempéries: toutefois, il existe plusieurs arguments qui plaident en faveur d'un revêtement protecteur, en vue notamment d'empêcher ou d'éliminer les désavantages suivants :

- humidité : une façade extérieure de béton cellulaire non-traité absorbe d'emblée l'eau, notamment la pluie, qui touche sa surface:
- la dégradation de l'isolation thermique : la présence d'eau dans le support poreux, notamment dans le béton cellulaire, influence défavorablement l'isolation thermique;
- les fissures d'armature : en provoquant la rouille des armatures de renforcement, par exemple des barres et treillis d'acier, l'humidité favorise la formation de fissures d'armature dans le béton cellulaire armé:
- dégâts de gel : à la limite, la présence d'eau condensée sous forme de gouttelettes peut conduire à un éclatement du béton cellulaire par temps de gel;
- efflorescences : l'eau absorbée dans le béton cellulaire contribue au déplacement, dans le sens du courant d'eau, de sels solubles éventuels qui cristallisent alors en surface aux endroits où l'eau s'évapore.

Il est connu d'utiliser des peintures murales de recouvrement à base de silicones pour protéger une façade en béton cellulaire de l'action des intempéries. Ces peintures murales ont la propriété de se greffer chimiquement aux atomes de silice d'un support à recouvrir et de former à la surface du support par polymérisation, un film protecteur formant une barrière hydrofugeante.

De telles peintures murales de recouvrement sont généralement destinées à un support lisse à structure fermée non adsorbante. Elles sont généralement appliquées au rouleau afin de garantir une uniformité parfaite.

Dans ce mode de réalisation, le film protecteur est directement soumis à l'action du vent et de la pluie et disparaît par érosion en moins de deux à trois ans.

Lorsqu'il s'agit de protéger une surface poreuse nue de béton cellulaire, on constate une certaine difficulté à obtenir une répartition uniforme du produit de revêtement, en raison de la porosité élevée de celui-ci. En particulier lorsque l'étendage du produit de revêtement est effectué à l'aide d'un rouleau de peintre, cette porosité conduit à une imprégnation excessive à certains endroits de la surface et insuffisante à d'autres endroits, puisque le rouleau fraîchement chargé de produit de revêtement mural dépose à l'endroit d'impact, plus de produit de revêtement que dans une zone adjacente nourrie par le rouleau épuisé.

L'action hydrofugeante de la couche protectrice inégalement répartie au rouleau est rapidement effacée par le temps dans les zones peu imprégnées, avec pour conséquences néfastes, la formation prématurée de mousses, la dégradation de l'isolation thermique, la formation de fissures d'armature et l'éclatement dû au gel.

Un deuxième inconvénient de ces peintures murales, sont les effets secondaires lors du séchage. Lorsque des produits de revêtement fluides sont appliqués sur une surface poreuse nue, les solvants et les liants, sensibles à l'eau, forment lors du séchage, des microfissures aux endroits des arêtes vives et aux bords des cellules poreuses du support.

Par le document FR-A-2334795, on connaît un procédé selon lequel une façade de bâtiment est, après préparation préalable du support, imprégnée au moyen d'une couche d'imprégnation primaire à base de silicones, et d'une petite proportion de molécules de résine acrylique et vinylique en émulsion aqueuse. La couche d'imprégnation primaire est appliquée à raison de 200 g/m² environ.

Ensuite on applique, à raison de 2kg/m² environ, une couche de revêtement semi-épais comprenant des silicones pouvant réagir avec les silicones de la couche primaire et des éléments de grande dureté finement divisés, par exemple du sable et du quartz. Cette couche de revêtement semi-épais contient donc des agents de pontage et présente une parfaite adhérence sur le support siliconé.

L'inconvénient de ce procédé réside dans le fait que la composition destinée à former une couche d'imprégnation primaire n'est pas un mélange homogène stable.

En outre, la couche de revêtement semi-épais, présente par sa composition une consistance pâteuse semi-épaisse trop visqueuse pour pouvoir être étendue au pinceau ou au pistolet.

La couche de revêtement doit donc être appliquée à la spatule à la manière d'un revêtement de plafonnage.

Pour remédier à ces inconvénients, la présente invention propose pour appliquer un revêtement de parachèvement sur une face de parement d'un support poreux, en particulier une façade formée de panneaux de béton cellulaire, un procédé tel que décrit dans le premier paraphe du présent mémoire.

Ce procédé est caractérisé en ce qu' :

1) on dilue à l'aide de solvant organique la composition siliconée destinée à former la couche d'imprégnation primaire et on l'applique sur le support à raison de 50 à 250 g/m² afin d'en imprégner ledit support,

2) après 24 heures de séchage, on applique sur le support imprégné à raison d'au moins 500 g/m²; une couche de peinture murale de remplissage composée d'un mélange de copolymère acrylique plasto-élastique insaponifiable,

3) on laisse se faire la diffusion du solvant organique de la couche d'imprégnation primaire au travers de la couche de peinture murale de remplissage vers la surface extérieure où il s'évapore, en vue de favoriser la migration de composés siliconés à partir de la couche primaire vers la couche de peinture murale de remplissage et permettre de prolonger dans la couche de peinture murale de remplissage, les chaînes polymérisées de composés siliconés qui se greffent aux agents de pontage contenus dans ladite couche.

Suivant une particularité de l'invention, les agents de pontage sont des particules de matière silicieuse, en particulier des grains de sable blanc. De préférence, la peinture murale de remplissage est constituée d'un mélange contenant un copolymère acrylique formant une résine acrylique plastoélastique insaponifiable et de particules de matière silicieuse, ce mélange étant exempt de composés siliconés.

L'adhérence exceptionnelle du revêtement selon l'invention est due au fait que les particules de matière silicieuse sont des points d'ancrage qui renforcent la fixation de la peinture murale de remplissage au support.

L'invention concerne aussi une composition destinée à constituer une couche d'imprégnation primaire d'étanchéité à l'eau pour un revêtement de parachèvement sur une face de parement d'un support poreux, caractérisée en ce qu'elle contient des composés siliconés, une résine synthétique et, un solvant organique, en particulier du white spirite et/ou de la thérébentine.

D'autres particularités de l'invention apparaîtront au cours de la description détaillée suivante d'un mode de réalisation particulier de l'invention, donné à titre d'exemple illustratif et non limitatif, en faisant référence aux dessins ci-annexés.

Dans ces dessins :

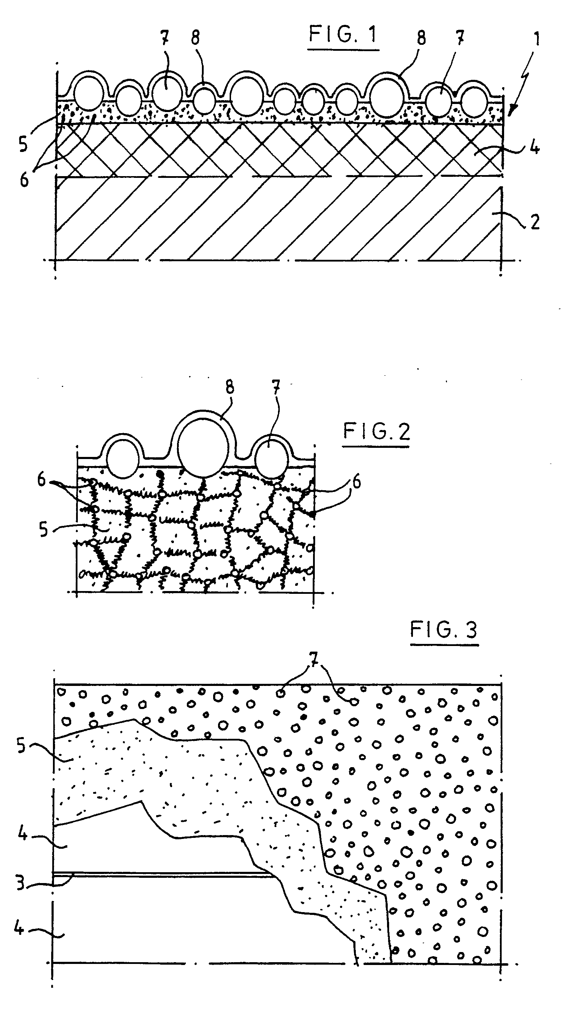

- la figure 1 est une vue en coupe au travers d'un revêtement de parachèvement selon l'invention, d'un support poreux,
- la figure 2 est une vue en coupe illustrant l'action renforçante de grains de sable dans le procédé selon l'invention, et
- la figure 3 est une vue en plan partiellement arrachée du revêtement de parachèvement montré à la figure 1.

Dans ces dessins, les mêmes signes de référence désignent des éléments identiques ou analogues.

Avant d'appliquer un revêtement de parachèvement désigné dans son ensemble par le signe de référence 1 sur une face de parement d'un support poreux 2, il faut veiller à ce que celle-ci soit réalisée de telle façon que toute infiltration d'eau soit exclue. En particulier, il faut que les joints non-statiques 3 entre panneaux composites de béton cellulaire soient rejointoyés ou bouchés à l'aide d'une masse plasto-élastique. De même, les armatures de renforcement visibles ou qui effleurent la surface extérieure, doivent être recouvertes d'un produit de rebouchage.

Les joints défectueux et les endroits friables sont réparés et bouchés. Le support d'application destiné à recevoir le revêtement selon l'invention et ainsi élaboré, est préalablement débarrassé des algues.

Les efflorescences de sels sont brossées à sec. Les algues et les mousses sont éliminées à l'aide d'une composition anti-mousse.

Le revêtement de parachèvement selon l'invention, comporte quatre couches.

La première consiste en l'application d'une couche d'imprégnation 4 destinée à réduire le pouvoir absorbant du support à traiter. Ce produit d'imprégnation possède de préférence de bonnes propriétés de remplissage afin de combler la texture ouverte du support, constitué par exemple de béton cellulaire.

On veille à ce que la surface du béton cellulaire soit sèche sur une profondeur de 3 mm, avant d'appliquer la première couche d'imprégnation. L'apport de cette couche 4 s'effectue par pulvérisation au pistolet sous pression artmosphérique d'une composition siliconée à base de résine synthétique du type "Brander Unigrund S" de Solvay. Cette composition pénètre jusqu'à une profondeur de 2 à 3 cm dans le support poreux. Elle réduit nettement l'absorbance du support tout en assurant une certaine perméabilité. La quantité de composition à appliquer est d'environ 250 ml/m$^2$.

L'une des principales exigences de la couche primaire 4 d'imprégnation est l'uniformité d'application.

Surtout lorsque le matériau du support possède un grand pouvoir d'absorption, il est interdit d'appliquer la couche primaire 4 au rouleau ou au pinceau. Lors du premier contact d'un rouleau ou pinceau bien imprégné d'un produit de revêtement, la majeure partie du produit est immédiatement absorbée au même endroit, de sorte que la surface environnante ne sera imprégnée que superficiellement et insuffisamment.

Après séchage, les endroits bien imprégnés sont protégés de la pluie et permettent à celle-ci de perler. Toutefois, lors du moindre coup de vent, les gouttelettes perlées sont repoussées vers des zones environnanrtes peu ou pas protégées où elles sont quand même absorbées pour donner lieu à des tâches d'humidité importante.

Il est donc indispensable de réaliser une imprégnation homogène sur toute la surface à protéger. Une répartition homogène s'obtient par pulvérisation d'une couche d'imprégnation au pistolet sous pression réduite.

L'apport d'une couche d'imprégnation hydrophobe primaire sur le support poreux procure les avantages suivants:

- elle empêche l'absorption d'eau même par vent violent;
- elle agit directement après évaporation du solvant;
- elle augmente la résistance du matériau contre les dégâts de gel;
- elle empêche les efflorescences, ainsi que la formation de moisissures, d'algues et de mousses;
- elle limite l'accrochage de saletés;
- elle augmente l'isolation thermique, agit en profondeur et est invisible:
- elle n'influence pas la diffusion de vapeur;
- elle ne forme pas de film laiteux en surface;

- elle peut être appliquée plusieurs fois en suivant;
- elle n'empêche pas l'application de peintures synthétiques résineuses en dispersion dans l'eau ou l'application de couches de parachèvement;
- elle peut être appliquée sur un support imprégné au préalable.

Après 24 heures de séchage, on applique au pistolet une couche 5 de peinture murale de remplissage.

La peinture murale de remplissage se compose d'un mélange de copolymère acrylique plasto-élastique insaponifiable dans laquelle sont insérées des particules de matière silicieuse, par exemple des grains de sable blanc 6.

La présence de grains de sable 6 dans la couche de remplissage à travers laquelle diffuse les composés siliconés du produit d'imprégnation, appliqué quelques instants plus tôt sur la face de parement à protéger, a un double rôle. Ces grains permettent au remplissage de créer des ponts et d'accoupler chimiquement les chaînes polymérisées et polymérisation desdits composés siliconés. Ces composés siliconés polymérisés se greffent aux grains et constituent ainsi un réseau tridimensionnel dont les noeuds sont entre eux les grains de sable qui servent de point d'ancrage de la couche d'imprégnation au support dont la résistance mécanique. La migration des composés siliconés à partir de la couche primaire d'imprégnation dans la couche ultérieure de peinture murale est aidée et facilitée par la diffusion du solvant vers la surface extérieure où il s'évapore. Par la présence de grains de sable 6, la couche 5 de peinture de remplissage offre l'avantage d'une structure sableuse poreuse qui permet la diffusion de la vapeur d'eau. En outre, les grains de sable constituent des points d'ancrage répartis dans la peinture de remplissage en vue d'accrocher celle-ci au support poreux par des chaines siliconées.

L'épaisseur de la couche 5 de peinture murale de remplissage correspond :

à environ 1 kg/m$^2$ pour un revêtement fin:

à environ 1,5 kg/m$^2$ pour un revêtement plus grossier mettant en oeuvre des fragments minéraux de 2,5 à 5 mm;

à environ 2,0 kg/m$^2$ pour un revêtement à l'aide de grenaille de plus de 5mm de diamètre.

Tant que la peinture murale de remplissage est encore humide, on projette sur celle-ci une multitude de grains minéraux 7 en couche homogène serrée à l'aide d'une lance à air. Un mélange de grains minéraux est composé de préférence d'environ 96% de grains de marbre et/ou quartzite et d'environ 4% de glitter, de nacre ou d'autres produits minéraux.

Pour assurer une projection violente des grains minéraux 6 contre la couche de peinture de remplissage afin que ceux-ci puissent se fixer dans la couche de peinture, il faut mettre en oeuvre des pression d'air de l'ordre de 7 bars obtenue à l'aide d'un compresseur.

La dimension et la composition des grains minéraux n'est pas limitative. Les grains sont sélectionnés en vue d'obtenir une résistance aux intempéries et une uniformité de couleur optimales. Les quantités à consommer dépendent de l'aspect du revêtement. Elles sont de 2 à 3 kg de mélange granuleux par mètre carré pour une granulométrie, dite fine, inférieure à 2 mm, de 4 à 5 kg/m² pour une granulométrie comprise entre 2 et 5 mm, et de 6 à 7 kg/m² pour une granulométrie supérieure à 5mm.

Après séchage complet de la peinture de remplissage, on applique une quatrième et dernière couche 8 d'une dispersion de résine synthétique non-ramollissante d'isolation extérieure, incolore après séchage.

Le recouvrement peut éventuellement être appliqué en diverses couches. Les quantités à appliquer dépendent du degré de dilution aqueuse, du degré d'absorption de la surface d'application et de la texture que l'on désire obtenir.

La couche de coating de finition confère au revêtement une étanchéité à l'eau et une résistance accrue aux intempéries par le fait qu'elle empêche toute infiltration d'eau.

Le produit de coating est généralement allongé d'eau dans des proportions égales pour obtenir une bonne brillance, et dans des proportions de 1:2 pour obtenir un aspect mat.

**Revendications**

1. Procédé pour appliquer un revêtement de parachèvement (1) sur une face de parement d'un support poreux (2), en particulier une façade formée de panneaux de béton cellulaire, selon lequel, après nettoyage préalable et la préparation du support (2), on applique sur celui-ci à raison de moins de 250 g/m², une couche d'imprégnation primaire (4) d'étanchéité à l'eau constituée d'une composition siliconée contenant des composés siliconés et une résine synthétique ; puis on applique, par pulvérisation au pistolet, une couche (5) de peinture murale de remplissage constituée d'un composition contenant des copolymères acryliques dans laquelle on incorpore des agents de pontage constitués d'éléments minéraux de grande dureté aptes à former des liens qui renforcent l'accrochage de la couche (5) de peinture murale de remplissage au support (2) ;

  - éventuellement on projette sur la peinture murale de remplissage fraîchement appliquée, une multitude de grains minéraux (7) décoratifs, caractérisé en ce que :

   1) on dilue à l'aide de solvant organique la composition siliconée destinée à former la couche d'imprégnation primaire (4) et on l'applique sur le support (2) à raison de 50 à 250 g/m² afin d'en imprégner ledit support,

   2) après 24 heures de séchage, on applique sur le support imprégné à raison d'au moins 500 g/m²; une couche (5) de peinture murale de remplissage composée d'un mélange de copolymère acrylique plasto-élastique insaponifiable,

   3) on laisse se faire la diffusion du solvant organique de la couche d'imprégnation primaire (4) au travers de la couche (5) de peinture murale de remplissage vers la surface extérieure où il s'évapore, en vue de favoriser la migration de composés siliconés à partir de la couche primaire vers la couche (5) de peinture murale de remplissage et permettre de prolonger dans la couche (5) de peinture murale de remplissage, les chaînes polymérisées de composés siliconés qui se greffent aux agents de pontage contenus dans ladite couche (5).

2. Procédé selon la revendication 1, caractérisé en ce que les agents de pontage sont des particules de matière silicieuse, en particulier des grains de sable blanc (6).

3. Procédé selon l'une quelconque des revendications précédentes, caractérisée en ce que la peinture murale de remplissage est constituée d'un mélange contenant un copolymère acrylique formant une résine acrylique plasto-élastique insaponifiable et de particules de matière silicieuse, ce mélange étant exempt de composés siliconés.

4. Procédé selon l'une quelconque des revendications précédentes, caractérisé en ce qu'on projette sur la peinture murale de remplissage fraîchement appliquée, une multitude de grains minéraux (7) de 2 à 5 mm, à l'aide d'une lance à air, tant que la couche (5) de peinture murale de remplissage est encore humide.

5. Composition destinée à constituer une couche d'imprégnation primaire (4) d'étanchéité à l'eau pour un revêtment de parachèvement (1) sur une face de parement d'un support poreux (2), caractérisée en ce qu'elle contient des composés siliconés, une résine synthétique et un solvant organique.

## Claims

1. Process for applying a finishing coating (1) to a facing surface of a porous support (2), in particular a facade formed from panels of cellular concrete according to which, after preliminary cleaning and the preparation of the support (2) there is applied thereto, in a proportion of less than 250 g/m², a water-tight primary impregnation layer (4) consisting of a silicone composition containing silicone compounds and a synthetic resin; there is then applied, by atomisation using a gun, a layer (5) of filling wall paint consisting of a composition containing acrylic copolymers in which there are incorporated bridging agents consisting of mineral elements of great hardness capable of forming bonds which strengthen the attachment of the layer (5) of filling wall paint to the support (2);

   - a plurality of decorative mineral grains (7) is optionally sprayed onto the freshly applied filling wall paint, characterised in that:

   1) the silicone composition intended to form the primary impregnation layer (4) is diluted by means of an organic solvent and is applied to the support (2) in a proportion of 50 to 250 g/m² in order to impregnate said support therewith,

   2) after 24 hours of drying, a layer (5) of filling wall paint composed of a mixture of nonsaponifiable plasto-elastic acrylic copolymer is applied to the impregnated support in a proportion of at least 500 g/m²,

   3) the organic solvent of the primary impregnation layer (4) is left to diffuse through the layer (5) of filling wall paint toward the external surface where it evaporates, in order to promote the migration of silicone compounds from the primary layer toward the layer (5) of filling wall paint and to allow the polymerised chains of silicone compounds which graft themselves on the bridging agents contained in said layer (5) to lengthen in the layer (5) of filling wall paint.

2. Process according to claim 1, characterised in that the bridging agents are particles of siliceous material, in particular grains of white sand (6).

3. Process according to any one of the preceding claims, characterised in that the filling wall paint consists of a mixture containing an acrylic copolymer forming a nonsaponifiable plasto-elastic acrylic resin and particles of siliceous material, this mixture being free from silicone compounds.

4. Process according to any one of the preceding claims, characterised in that a plurality of mineral grains (7) of 2 to 5 mm is sprayed onto the freshly applied filling wall paint by means of an air lance while the layer (5) of filling wall paint is still damp.

5. Composition intended to constitute a waterproof primary impregnation layer (4) for a finishing coating (1) on a facing surface of a porous support (2), characterised in that it contains silicone compounds, a synthetic resin and an organic solvent.

## Patentansprüche

1. Verfahren zum Aufbringen einer Endbeschichtung (1) auf der Außenfläche eines porösen Untergrunds (2), insbesondere einer aus Zellbetonplatten gebildeten Fassade, bei dem,

   - im Anschluß an eine vorangehende Reinigung und die Vorbereitung des Untergrunds (2), auf diesem eine Menge von weniger als 250g/m² einer ersten wasserdichten Imprägnierschicht (4) aufgebracht wird, welche aus einer silikonisierte Verbindungen und ein Kunstharz enthaltenden silikonisierten Zusammensetzung besteht;

   - danach im Spritzverfahren eine Füllschicht (5) aus Wandfarbe aufgebracht wird, welche aus einer Acryl-Kopolymere enthaltenden Zusammensetzung besteht, welcher Haftvermittler beigegeben sind, die aus Mineralelementen großer Härte bestehen, die in der Lage sind, Verbindungen zu schaffen, welche die Haftung der Füllschicht (5) aus Wandfarbe auf dem Untergrund (2) verstärken;

   - gegebenenfalls auf der frisch aufgebrachten Füllschicht aus Wandfarbe eine Vielzahl dekorativer Mineralkörner (7) aufgespritzt wird,

dadurch gekennzeichnet, daß:

   1) die zur Bildung der ersten Imprägnierschicht (4) vorgesehene silikonisierte Zusammensetzung durch ein organisches Lösungsmittel verdünnt und auf dem Untergrund (2) in einer Menge von 50 bis 250 g/m² aufgebracht wird, um damit den Untergrund zu imprägnieren,

   2) nach 24-stündigem Trocknen, eine Füllschicht (5) aus Wandfarbe in einer Menge von wenigstens 500 g/m² auf dem imprägnierten Untergrund aufgebracht wird, die aus einer Mischung aus unverseifbaren plasto-elastischen Acryl-Kopolymeren besteht,

3) die Diffusion des organischen Lösungsmittels von der ersten Imprägnierschicht (4) durch die Füllschicht (5) aus Wandfarbe zur Außenfläche hin zugelassen wird, wo es verdampft, um die Wanderung von silikonisierten Verbindungen von der ersten Schicht in die Füllschicht (5) aus Wandfarbe zu begünstigen und in der Füllschicht (5) aus Wandfarbe eine Verlängerung der polymerisierten Ketten der silikonisierten Verbindungen zu erlauben, die sich an die in der Schicht (5) enthaltenen Haftvermittler anhängen.

2. Verfahren nach Anspruch 1, dadurch gekennzeichnet, daß die Haftvermittler Partikel siliziumhaltigen Materials sind, insbesondere Körner weißen Sandes (6).

3. Verfahren nach einem der vorhergehenden Ansprüche, dadurch gekennzeichnet, daß die füllende Wandfarbe aus einer Mischung besteht, welche einen ein unverseifbares plasto-eleastisches Acrylharz bildenden Acryl-Kopolymeren und Partikel siliziumhaltigen Materials enthält, wobei die Mischung von silikonisierten Verbindungen frei ist.

4. Verfahren nach einem der vorhergehenden Ansprüche, dadurch gekennzeichnet, daß auf die frisch aufgebrachte füllende Wandfarbe eine Vielzahl von Mineralkörnern (7) von 2 bis 5 mm mit einer Luftdüse aufgespritzt wird, während die Füllschicht (5) aus Wandfarbe noch feucht ist.

5. Zusammensetzung für die Bildung einer ersten wasserdichten Imprägnierschicht (4) für eine Endbeschichtung (1) auf einer Außenfläche eines porösen Untergrunds (2), dadurch gekennzeichnet, daß sie silikonisierte Verbindungen, ein Kunstharz und ein organisches Lösungsmittel enthält.

_FIG. 1_

_FIG. 2_

_FIG. 3_